# FASCICULE DE BREVET EUROPEEN

(11) **EP 1 909 216 B1**
(45) Date de publication et mention de la délivrance du brevet: **17.12.2008**
(21) Numéro de dépôt: 07291144.9
(22) Date de dépôt: 29.09.2007
(51) Int. Cl.: G06K 13/08

(54) **Lecteur de carte et machine de fourniture de service comprenant un tel lecteur de carte**
Kartenleser und Dienstleistungsmaschine, die einen solchen Kartenleser umfasst
Card reader and machine for providing a service comprising such a card reader

(30) Priorité: 05.10.2006 FR 0608765
(43) Date de publication de la demande: 09.04.2008
(73) Titulaire: PARKEON, 75015 Paris (FR)
(72) Inventeur: Klein, Pierre, 25870 Devecey (FR); Descamps, Sébastien, 39100 Dole (FR)
(74) Mandataire: Habasque, Etienne J. Jean-François

(56) Documents cités:
- EP-A1- 0 492 684
- GB-A- 2 265 766

## Description

La présente invention concerne un lecteur de carte.

La carte dont il est question dans l'invention comporte une plaque, généralement rectangulaire et en matière plastique, sur laquelle est fixé un support de données, tel qu'une puce électronique.

Les dimensions de la plaque sont faibles : quelques centimètres en largeur et en longueur, et de l'ordre du millimètre en épaisseur.

L'invention s'applique particulièrement dans le domaine des cartes de paiement, qui nécessitent un haut niveau de sécurité.

Ce type de carte est décrit plus amplement dans les normes ISO 7816 - ISO IEC 7813/ ISO 7810.

Il est connu de l'état de la technique d'utiliser un lecteur de carte du type comprenant une structure de réception de la carte délimitant, d'une part, un logement pour la carte et, d'autre part, une fente pour introduire la carte dans le logement, la structure de réception comportant une portion de guidage de la carte introduite jusqu'à une position dans le logement de lecture de ladite carte.

Un problème récurrent dans le domaine de l'invention est celui du vandalisme. Ce problème est d'autant plus important pour les lecteurs qui ne sont pas sous surveillance, comme c'est par exemple le cas des lecteurs installés dans les horodateurs, sur la voirie.

Une forme de vandalisme courante consiste à introduire dans le lecteur, par la fente, des objets non prévus à cet effet. Un objet souvent retrouvé est une demi-carte, c'est-à-dire une carte coupée dans le sens de la longueur.

Une solution pour lutter contre ce problème a été de prévoir, juste derrière la fente, une cavité s'étendant en dessous du niveau de la fente. Ainsi, les objets trop petits, tels que les demi-cartes, tombaient par gravité dans la cavité. Le personnel d'entretien n'avait donc plus qu'à venir ramasser périodiquement les objets indésirables.

Il s'agit d'une solution au vandalisme relativement efficace et qui s'est de fait largement répandue.

Un lecteur de carte de ce type est par exemple commercialisé par la société Hopt & Schüler, sous la référence « série 862 ».

Un lecteur de carte de ce type est également connu d'après le document FR-A1-2 670 928.

Néanmoins, la solution connue précédente présente l'inconvénient qu'elle laisse accessible au personnel d'entretien l'électronique interne du lecteur, et notamment le dispositif de lecture. Il existe donc un risque important qu'un dispositif espion soit mis en place. Les documents US-B-7 011 537 et GB-A-2265766 décrivent un lecteur de carte comprenant un balai pour éjecter la carte.

L'invention a pour but de proposer un lecteur de carte muni d'un système anti-vandalisme ne nécessitant pas la cavité précédente et principalement capable d'éjecter tous types d'objects de tailles différentes.

A cet effet, l'invention a pour objet un lecteur de carte selon la revendication 1.

En outre, l'invention présente l'avantage de ne pas empêcher le vandalisme comme dans l'état de la technique, ce qui évite que les vandales ne s'acharnent sur la machine et ne la détériore complètement.

Le lecteur de carte selon l'invention est compatible avec la dernière norme PCl PED (« Payment Card Industry Pin Entry Device) qui prévoient d'envelopper par des parois de sécurité l'électronique sensible.

Selon d'autres caractéristiques de l'invention :
- le balai est situé, en position avancée, à moins de 10 millimètres, de préférence moins de 5 millimètres, d'au moins une partie de la fente ;
- le lecteur comprend un dispositif de lecture par contact de la carte, et le balai est percé d'avant en arrière par un évidement de passage du dispositif de lecture ;
- le lecteur comprend des parois de sécurité latérales enveloppant latéralement la structure de réception, et le mécanisme d'actionnement est accessible depuis l'extérieur des parois de sécurité ;
- les parois de sécurité sont conformes à la norme PCI PED ;
- le mécanisme d'actionnement comprend un levier dont une extrémité est destinée à repousser le balai ;
- le levier est muni d'une autre extrémité dépassant à l'extérieur des parois de sécurité par une ouverture ménagée à cet effet dans une des parois de sécurité ;
- le lecteur comprend un mécanisme de rappel du balai depuis sa position avancée jusqu'à sa position arrière ;
- le mécanisme de rappel comprend un ressort de rappel;
- le mécanisme de rappel comprend le levier, l'extrémité destinée à repousser le balai étant solidaire dudit balai d'avant en arrière ;
- le balai à une forme transversale en râtelier ; et
- le lecteur comprend une paroi délimitant le logement par dessous, ladite paroi étant munie de rainures parallèles s'étendant d'avant en arrière, et le balai en forme de râtelier est engrené dans les rainures.

L'invention a également pour objet une machine de fourniture de service, notamment pour le paiement de stationnement automobile, caractérisée en ce qu'elle comprend un lecteur de carte de paiement selon l'invention.

Selon d'autres caractéristiques de l'invention :
- la machine comprend une façade pivotante d'accès au lecteur de carte, ladite façade interdisant, en position fermée, l'accès au mécanisme d'actionnement ;
- la façade est reliée au mécanisme d'actionnement de sorte que l'ouverture de la façade provoque le coulissement du balai ; et
- la machine comprend un module de détection que la carte a été retirée suite à une transaction, et un module de commande du mécanisme d'actionnement suite à la détection.

L'invention sera mieux comprise à l'aide de la description qui va suivre, donnée uniquement à titre d'exemple et faite en se référant aux dessins annexés, parmi lesquels :
- les figures 1 et 2 sont des vues en perspective d'un lecteur de carte selon l'invention ;
- la figure 3 est une vue en coupe du lecteur de carte des figures 1 et 2 ; et
- la figure 4 est une vue en perspective de l'intérieur du lecteur de carte des figures précédentes.

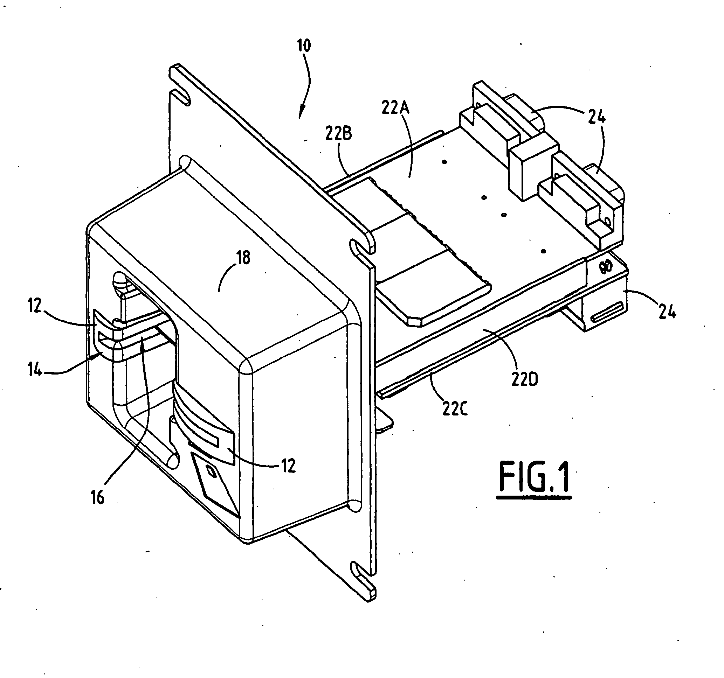

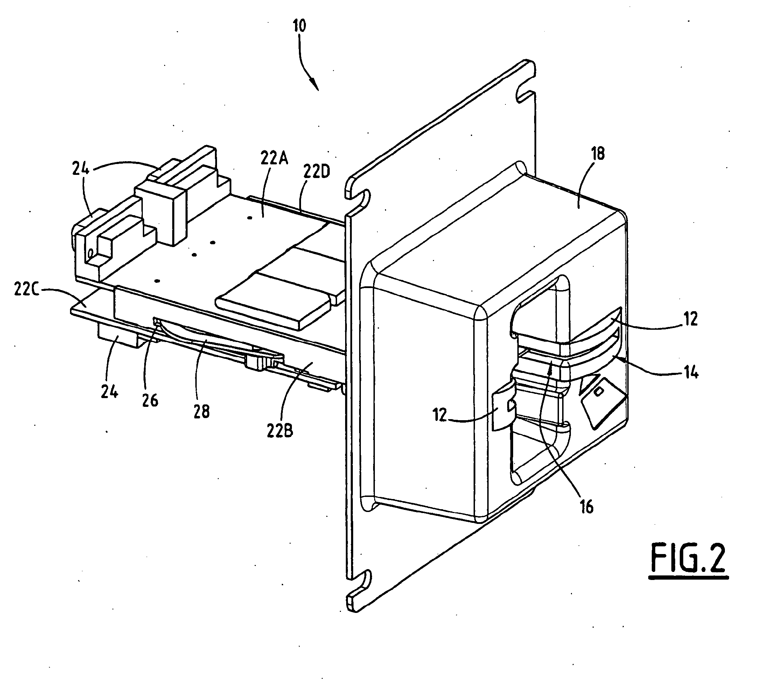

En référence aux figures 1 et 2, un lecteur de carte 10 est représenté. Ce lecteur de carte 10 est destiné à être implanté dans un horodateur utilisé pour gérer le paiement de stationnement automobile.

Dans le reste de la description, les termes « avant », « arrière », etc. feront référence à l'avant et l'arrière de l'horodateur. L'avant de l'horodateur est définit comme la partie de l'horodateur à laquelle un utilisateur fait face et avec laquelle il interagit. L'arrière de l'horodateur est définit comme la partie opposée à l'utilisateur.

L'horodateur comporte une façade avant dans laquelle est encastré le lecteur de carte 10.

La façade est pivotante et peut être ouverte afin d'accéder aux organes internes de l'horodateur, notamment au lecteur de carte 10. La façade interdit, en position fermée, l'accès au lecteur de carte autrement que par la fente 16.

Le lecteur de carte 10 comporte une structure 12 de réception de carte à puce.

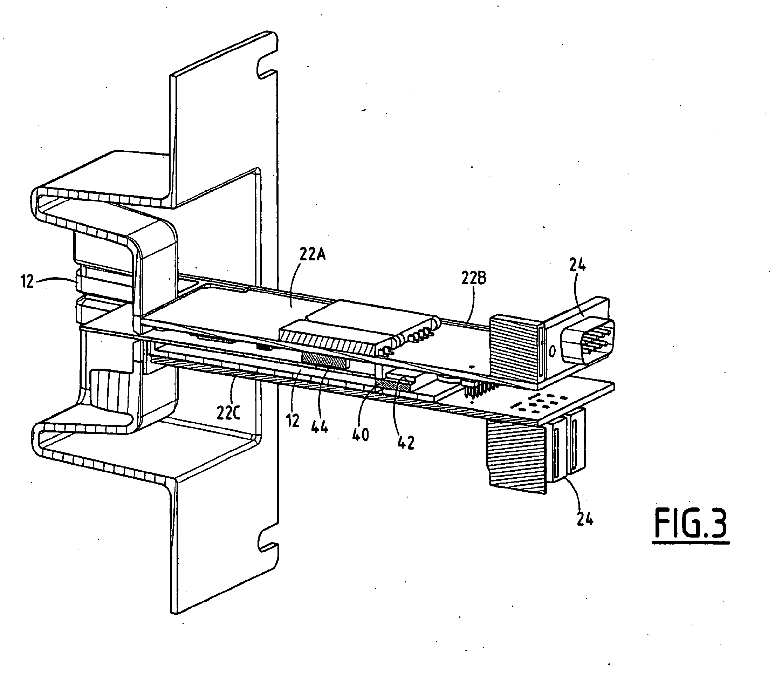

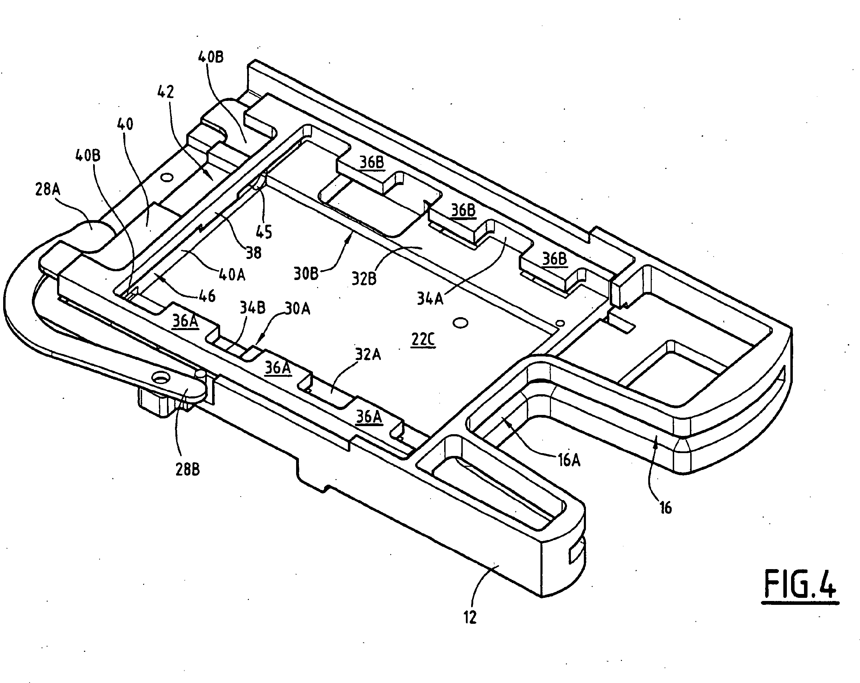

Sur les figures 1 et 2, seule la face avant 14 de la structure d'introduction 12 est visible. Cette face avant 14 délimite une fente 16 d'introduction de carte. Le reste de cette structure 12 sera décrit plus en détails plus loin, à l'aide des figures 3 et 4.

La fente 16 suit une ligne horizontale de forme générale en U. La fente 16 possède donc une partie 16A « enfoncée » correspondant à la base du U. Un boîtier avant 18 recouvre l'avant de la structure d'introduction. Le boîtier avant 18 possède un renfoncement 20 correspondant à la forme de la fente 16, permettant de saisir la carte pour la retirer.

Derrière le boîtier avant 18, quatre parois de sécurité latérales 22A, 22B, 22C, 22D enveloppent latéralement la structure de réception 12.

Les parois de sécurité 22A, 22B, 22C, 22D sont par exemple telles que leur percement ou leur démembrement entraîne la destruction des informations stockées dans le lecteur. Ceci peut être réalisé notamment en déposant un maillage conducteur sur les parois 22A, 22B, 22C, 22D, la rupture de ce maillage entraînant l'effacement des données du lecteur.

Les parois de sécurité supérieure 22A et inférieure 22C portent des composants électroniques de traitement des données de la carte (seuls ceux portés sur les faces externes des parois sont visibles sur les figures 1 et 2) et notamment des connecteurs 24 situés à l'arrière et destinés à échanger des données avec d'autres éléments de la machine, par exemple un clavier alphanumérique sur lequel l'utilisateur entre son code secret.

De préférence, les opérations sensibles, tel que la comparaison entre le code entré sur le clavier et le code mémorisé dans la carte, sont réalisées par l'électronique protégée à l'intérieur des parois 22A, 22B, 22C, 22D.

La connexion du lecteur de carte 12 par les connecteurs 24 permet également de fermer l'arrière de l'enveloppe formée par le boîtier avant 18 et les parois 22A, 22B, 22C, 22D.

La paroi latérale 22B, située sur un côté du lecteur de carte 12, est percée d'une ouverture 26 de passage d'un levier 28. Le levier 28 est monté pivotant par rapport à la structure de réception 12, autour d'un axe vertical. De préférence, l'ouverture 26 est ajustée au plus juste par rapport aux dimensions du levier 28, afin de minimiser encore les risques d'intrusion.

En référence à la figure 3 et 4, la structure de réception 12 comprend une portion de guidage formée de deux glissières parallèles 30A, 30B s'étendant de l'avant vers l'arrière du lecteur 10.

Chaque glissière 30A, 30B comporte un rail 32A, 32B, une paroi latérale de guidage 34A, 34B et une série de languettes 36A, 36B s'étendant au dessus du rail 32A, 32B. La carte est ainsi guidée horizontalement entre les deux parois de guidage 34A, 34B, et verticalement entre les rails 32A, 32B et les languettes 36A, 36B. On remarquera que la carte est guidée directement, c'est-à-dire qu'elle est en contact avec les glissières 30A, 30B, dans lesquelles elle glisse.

Une butée 38 d'arrêt de la carte est prévue à l'arrière du lecteur 10. Lorsque la carte est en butée contre la butée 38, cette carte est en position de lecture. Elle dépasse alors uniquement par la partie 16A de la fente, afin de pouvoir être retirée par l'utilisateur.

L'espace délimité horizontalement entre les rails 32A, 32B et les languettes 36A, 36B, longitudinalement entre la fente 16 et la butée 38 et verticalement par les paroi de guidage 34A, 34B, définit un logement de la carte. En d'autres termes, il s'agit du volume occupé dans lecteur 10 par la carte en position de lecture.

Le lecteur de carte 12 comprend en outre un balai 40 monté coulissant dans les glissières 30A, 30B, depuis une position arrière, représentée sur la figure 3, jusqu'à une position avancée.

Le balai 40 a une forme générale de barre rectangulaire orientée à l'horizontale transversalement. Une partie centrale 40A s'étend d'une glissière à l'autre, et vers le bas contre la paroi de sécurité inférieure 22C. Cette partie centrale 40A s'élève jusqu'au niveau des languettes 36A, 36B sauf pour un évidemment 42 perçant le balai 40 d'avant en arrière et orienté vers le haut.

Cet évidemment 42 permet le passage d'un dispositif de lecture 44 fixé sur la paroi de sécurité supérieure 22A vers le bas. Dans l'exemple décrit, le dispositif de lecture est un coupleur destiné à venir en contact avec la puce de la carte.

Une encoche cylindrique 45 est en outre ménagée dans l'évidement 42, vers l'avant, de manière à y loger un actionneur faisant contact sur un interrupteur (non représentés) indiquant que la carte est insérée en butée.

La partie centrale 40A est prolongée dans sa longueur par deux ailerons 40B reposant chacun sur un rail 30A, 30B, et s'étendant également jusqu'au niveau des languettes 36A, 36B.

Ainsi, le balai 40 est muni d'une face avant 46 couvrant toute la surface en coupe transversale du logement, excepté pour l'évidemment 42 de passage du dispositif de lecture 44. En pratique, la face avant 46 couvre plus de 50% de la surface précédente, de préférence plus de 75 %.

En outre, la face avant 46 couvre entièrement la surface en coupe transversale de l'espace séparant le logement de la paroi inférieure 22C.

La position arrière du balai 40 est située à l'opposé de la fente 16 et est dégagée du logement, afin de ne pas gêner l'insertion de la carte. On remarquera à cet effet que les glissières 30A, 30B se prolongent vers l'arrière au-delà de la butée 38.

La position avancée du balai 40 est située à proximité de la fente 16, à moins de 10 millimètres, de préférence moins de 5 millimètres, de la partie enfoncée 16A de la fente 16.

Le levier 28 est muni d'une extrémité 28A située derrière le balai 40 et destinée à repousser le balai 40 vers l'avant.

Le levier 28 est en outre muni d'une autre extrémité 28B dépassant à l'extérieur de l'enveloppe formée par les parois de sécurité, comme cela est visible sur la figure 2.

Le fonctionnement du lecteur de carte 10 pour éjecter les objets indésirables présents dans le logement va à présent être décrit.

L'opérateur de maintenance ouvre la façade avant de l'horodateur. Il fait pivoter le levier 28 en tirant sur son extrémité 28B. En réaction, l'extrémité 28A avance vers l'avant et repousse le balai 40 jusqu'à ce que ce dernier atteigne sa position avancée. Le levier 28 forme donc un mécanisme d'actionnement du balai 40.

Au cours du coulissement, la face avant 46 balaye notamment le volume du logement et éjecte les objets indésirables pouvant s'y trouver.

Dans un mode de réalisation non représenté, le balai a une forme transversale en râtelier.

De préférence, le lecteur comprend une paroi délimitant le logement par dessous, ladite paroi étant munie de rainures parallèles s'étendant d'avant en arrière. Le balai en forme de râtelier est alors engrené dans les rainures.

Dans un autre mode de réalisation non représenté, la position avancée du balai est telle que la face avant du balai obstrue la fente de manière à affleurer cette dernière au moins sur une partie de sa longueur. Cela permet de s'assurer que les objets indésirables sont bien éjectés, même s'ils sont petits.

Dans un autre mode de réalisation non représenté, la face avant possède une forme épousant celle de la fente. Cela diminue le risque qu'un objet reste dans le logement, entre le balai et la fente, dans une zone où les deux seraient relativement éloignés l'un de l'autre.

Dans un perfectionnement non représenté, la façade est reliée au mécanisme d'actionnement de sorte que l'ouverture de la façade provoque le coulissement du balai vers l'avant.

En alternative, l'horodateur comprend un module de détection que la carte a été retirée du lecteur suite à une transaction, et un module de commande du mécanisme d'actionnement suite à la détection.

Dans un autre perfectionnement non représenté, le lecteur de carte comprend un mécanisme de rappel du balai depuis sa position avancée jusqu'à sa position arrière.

Ceci est réalisé par exemple en utilisant un ressort de rappel.

En variante, le mécanisme de rappel comprend le levier lui-même, l'extrémité destinée à repousser le balai étant solidaire du balai d'avant en arrière. Ainsi, l'opérateur replace automatiquement le balai en position arrière en replaçant le levier.

## Revendications

1. Lecteur de carte comprenant :
- une structure (12) de réception de la carte délimitant, d'une part, un logement pour la carte et, d'autre part, une fente (16) pour introduire la carte dans le logement, la structure de réception (12) comportant une portion de guidage (30A, 30B) de la carte introduite jusqu'à une position dans le logement de lecture de ladite carte,
- un balai (40) monté coulissant dans la structure de réception (12) depuis une positon arrière, située à l'opposé de la fente (16) et dégagée du logement, jusqu'à une position avancée dans le logement, rapprochée de la fente (16), le balai (40) étant muni d'une face avant (46) couvrant au moins une partie de la surface en coupe transversale du logement, et
- un mécanisme (28) d'actionnement du balai (40) pour faire coulisser ledit balai (40) depuis sa position de repos en direction de sa position avancée,
le lecteur étant **caractérisé en ce que** la face avant (46) couvre plus de 50% de la surface en coupe transversale du logement, de préférence plus de 75%.

2. Lecteur de carte selon la revendication 1, **caractérisé en ce que** le balai (40) est situé, en position avancée, à moins de 10 millimètres, de préférence moins de 5 millimètres, d'au moins une partie (16A) de la fente (16).

3. Lecteur de carte selon ta revendication 1 ou 2, **caractérisé en ce qu'**il comprend un dispositif (44) de lecture par contact de la carte, et **en ce que** le balai (40) est percé d'avant en arrière par un évidement (42) de passage du dispositif de lecture (44).

4. Lecteur de carte selon l'une quelconque des revendications 1 à 3, **caractérisé en ce qu'**il comprend des parois (22A, 22B, 22C, 22D) de sécurité latérales enveloppant latéralement la structure de réception (12), et **en ce que** le mécanisme d'actionnement (28) est accessible depuis l'extérieur des parois de sécurité (22A, 22B, 22C, 22D).

5. Lecteur de carte selon la revendication 4, **caractérisé en ce que** les parois de sécurité (22A, 22B, 22C, 22D) sont conformes à la norme PCI PED.

6. Lecteur de carte selon l'une quelconque des revendications 1 à 5, **caractérisé en ce que** le mécanisme d'actionnement comprend un levier (28) dont une extrémité (28A) est destinée à repousser le balai (40).

7. Lecteur de carte selon la revendication 4 ou 5, prise avec la revendication 7, **caractérisé en ce que** le levier (28) est muni d'une autre extrémité (28B) dépassant à l'extérieur des parois de sécurité (22A, 22B, 22C, 22D) par une ouverture (26) ménagée à cet effet dans une des parois de sécurité (22A, 22B, 22C, 22D).

8. Lecteur de carte selon l'une quelconque des revendications 1 à 7, **caractérisé en ce qu'**il comprend un mécanisme de rappel du balai (40) depuis sa position avancée jusqu'à sa position arrière.

9. Lecteur de carte selon la revendication 8, **caractérisé en ce que** le mécanisme de rappel comprend un ressort de rappel.

10. Lecteur de carte selon les revendications 6 et 8 prises ensemble, **caractérisé** le mécanisme de rappel comprend le levier, l'extrémité destinée à repousser le balai étant solidaire dudit balai d'avant en arrière.

11. Lecteur de carte selon l'une quelconque des revendications précédentes, **caractérisé en ce que** le balai à une forme transversale en râtelier.

12. Lecteur de carte selon la revendication 11, **caractérisé en ce qu'**il comprend une paroi délimitant le logement par dessous, ladite paroi étant munie de rainures parallèles s'étendant d'avant en arrière, et **en ce que** le balai en forme de râtelier est engrené dans les rainures.

13. Machine de fourniture de service, notamment pour le paiement de stationnement automobile, **caractérisée en ce qu'**elle comprend un lecteur de carte de paiement selon l'une quelconque des revendications 1 à 12.

14. Machine selon la revendication 13, **caractérisée en ce qu'**elle comprend une façade pivotante d'accès au lecteur de carte, ladite façade interdisant, en position fermée, l'accès au mécanisme d'actionnement.

15. Machine selon la revendication 14, **caractérisée en ce que** la façade est reliée au mécanisme d'actionnement de sorte que l'ouverture de la façade provoque le coulissement du balai.

16. Machine selon la revendication 13, **caractérisée en ce qu'**elle comprend un module de détection que la carte a été retirée suite à une transaction, et un module de commande du mécanisme d'actionnement suite à la détection.

## Claims

1. Card reader comprising:
- a card receiving structure (12) defining, on the one hand, a receptacle for the card and, on the other hand, a slot (16) for inserting the card into the receptacle, the receiving structure (12) comprising a portion (30A, 30B) for guiding the inserted card into a reading position for said card in the receptacle,
- a brush (40) mounted in the receiving structure (12) to be slidable from a rear position located opposite the slot (16) and disengaged from the receptacle into an advanced position in the receptacle, close to the slot (16), the brush (40) being provided with a front surface (46) covering at least part of the cross-sectional surface of the receptacle, and
- an actuating mechanism (28) for the brush (40) to cause said brush (40) to slide from its resting position towards its advanced position,
the reader being **characterised in that** the front surface (46) covers more than 50% of the cross-sectional surface of the receptacle, preferably more than 75%.

2. Card reader according to claim 1, **characterised in that** the brush (40) is situated, in its advanced position, less than 10 millimetres, preferably less than 5 millimetres, from at least part (16A) of the slot (16).

3. Card reader according to claim 1 or 2, **characterised in that** it comprises a device (44) for reading the card by contact, and **in that** the brush (40) is perforated from front to back with an opening (42) through which the reading device (44) can pass.

4. Card reader according to any one of claims 1 to 3, **characterised in that** it comprises lateral security walls (22A, 22B, 22C, 22D) that laterally envelop the receiving structure (12), and **in that** the actuating mechanism (28) is accessible from outside the security walls (22A, 22B, 22C, 22D).

5. Card reader according to claim 4, **characterised in that** the security walls (22A, 22B, 22C, 22D) conform to the standard PCI PED.

6. Card reader according to any one of claims 1 to 5, **characterised in that** the actuating mechanism comprises a lever (28) one end (28A) of which is adapted to push back the brush (40).

7. Card reader according to claim 4 or 5, taken together with claim 7, **characterised in that** the lever (28) is provided with another end (28B) projecting externally beyond the security walls (22A, 22B, 22C, 22D) through an opening (26) provided for this purpose in one of the security walls (22A, 22B, 22C, 22D).

8. Card reader according to any one of claims 1 to 7, **characterised in that** it comprises a restoring mechanism for bringing the brush (40) back from its advanced position to its rear position.

9. Card reader according to claim 8, **characterised in that** the restoring mechanism comprises a return spring.

10. Card reader according to claims 6 and 8 taken together, **characterised in that** the restoring mechanism comprises the lever, the end adapted to push back the brush being fixedly attached to the brush from front to back.

11. Card reader according to any one of the preceding claims, **characterised in that** the brush is shaped like a rack in cross section.

12. Card reader according to claim 11, **characterised in that** it comprises a wall delimiting the receptacle from below, said wall being provided with parallel grooves extending from front to back, and **in that** the rack-shaped brush is engaged in the grooves.

13. Service provider machine, notably for paying for car parking, **characterised in that** it comprises a payment card reader according to any one of claims 1 to 12.

14. Machine according to claim 13, **characterised in that** it comprises a pivoting front for giving access to the card reader, said front barring access to the actuating mechanism when in the closed position.

15. Machine according to claim 14, **characterised in that** the front is connected to the actuating mechanism so that opening the front causes the brush to slide along.

16. Machine according to claim 13, **characterised in that** it comprises a module for detecting that the card has been withdrawn following a transaction, and a module for controlling the actuating mechanism following the detection.

## Patentansprüche

1. Kartenlesegerät mit:
- einem Annahmeaufbau (12) für die Karte, die einerseits eine Aufnahme für die Karte und andererseits einen Schlitz (16) zum Einführen der Karte in die Aufnahme aufweist, wobei der Annahmeaufbau (12) einen Führungsabschnitt (30A, 30B) zum Führen der eingeführten Karte in die Leseposition in der Aufnahme aufweist,
- einem Abkehrer (40), der in dem Annahmeaufbau (12) aus einer hinteren Position, die dem Schlitz (16) entgegengesetzt liegt und von der Aufnahme getrennt ist, in eine in die Aufnahme vorgeschobene Position, die nahe zum Schlitz (16) liegt, verschiebbar ist, wobei der Abkehrer (40) mit einer Vorderseite (46) versehen ist, die mindestens einen Teil der Querschnittfläche der Aufnahme abdeckt, und
- einem Mechanismus (28) zum Betätigen des Abkehrers (40), um den Abkehrer (40) aus seiner Ruhestellung in Richtung seiner vorgeschobenen Stellung gleiten zu lassen,
wobei das Kartenlesegerät **dadurch gekennzeichnet ist, dass** die Vorderseite (46) mehr als 50 % der Querschnittsfläche der Aufnahme, vorzugsweise mehr als 75 %, überdeckt.

2. Kartenlesegerät nach Anspruch 1, **dadurch gekennzeichnet, dass** der Abkehrer (40) in vorgeschobener Stellung weniger als 10 Millimeter, vorzugsweise weniger als 5 Millimeter, von mindestens einem Teil (16A) des Schlitzes (16) liegt.

3. Kartenlesegerät nach Anspruch 1 oder 2, **dadurch gekennzeichnet, dass** es eine Lesevorrichtung (44) zum Lesen der Karte durch Berührung aufweist, und dass der Abkehrer (40) von vorn nach hinten von einer Ausnehmung (42) für den Durchgang der Lesevorrichtung (44) durchsetzt ist.

4. Kartenlesegerät nach einem der Ansprüche 1 bis 3, **dadurch gekennzeichnet, dass** es seitliche Sicherheitswände (22A, 22B, 22C, 22D) aufweist, die die Annahmeaufbau seitlich umgeben, und dass der Betätigungsmechanismus (28) von außerhalb der Sicherheitswände (22A, 22B, 22C, 22D) her zugänglich ist.

5. Kartenlesegerät nach Anspruch 4, **dadurch gekennzeichnet, dass** die Sicherheitswände (22A, 22B, 22C, 22D) der Norm PCI PED entsprechen.

6. Kartenlesegerät nach einem der Ansprüche 1 bis 5, **dadurch gekennzeichnet, dass** der Betätigungsmechanismus einen Hebel (28) aufweist, von dem ein Ende (28A) dazu bestimmt ist, den Abkehrer (40) zurückzuschieben.

7. Kartenlesegerät nach Anspruch 4 oder 5, gemeinsam mit Anspruch 7 genommen, **dadurch gekennzeichnet, dass** der Hebel (28) mit einem anderen Ende (28B) versehen ist, das aus den Sicherheitswänden (22A, 22B, 22C, 22D) durch eine Öffnung (26), die dazu in einer der Sicherheitswände (22A, 22B, 22C, 22D) eingerichtet ist, herausragt.

8. Kartenlesegerät nach einem der Ansprüche 1 bis 7, **dadurch gekennzeichnet, dass** es einen Rückholmechanismus für den Abkehrer (40) zum Rückholen aus seiner vorgeschobenen in seine hintere Stellung aufweist.

9. Kartenlesegerät nach Anspruch 8, **dadurch gekennzeichnet, dass** der Rückholmechanismus eine Rückholfeder aufweist.

10. Kartenlesegerät nach den Ansprüchen 6 und 8 gemeinsam genommen, **dadurch gekennzeichnet, dass** der Rückholmechanismus den Hebel aufweist, wobei das Ende, das dazu bestimmt ist, den Abkehrer zurückzuschieben, fest mit dem Abkehrer von vorn nach hinten verbunden ist.

11. Kartenlesegerät nach einem der vorhergehenden Ansprüche, **dadurch gekennzeichnet, dass** der Abkehrer in Querrichtung Rechenform hat.

12. Kartenlesegerät nach Anspruch 11, **dadurch gekennzeichnet, dass** es eine Wand aufweist, die die Aufnahme von unten begrenzt, wobei die Wand mit parallelen Rillen versehen ist, die sich von vorn nach hinten erstrecken, und dass der Abkehrer in Rechenform in die Rillen eingreift.

13. Maschine zum Bereitstellen von Dienstleistungen, insbesondere für das Bezahlen des Parkens von Kraftfahrzeugen, **dadurch gekennzeichnet, dass** sie ein Zahlungskartenlesegerät nach einem der Ansprüche 1 bis 12 aufweist.

14. Maschine nach Anspruch 13, **dadurch gekennzeichnet, dass** sie eine schwenkbare Vorderseite für den Zugang zu dem Kartenlesegerät aufweist, wobei die Vorderseite in geschlossener Stellung den Zugang zum Betätigungsmechanismus sperrt.

15. Maschine nach Anspruch 14, **dadurch gekennzeichnet, dass** die Vorderseite mit dem Betätigungsmechanismus derart verbunden ist, dass das Öffnen der Vorderseite das Gleiten des Abkehrers bewirkt.

16. Maschine nach Anspruch 13, **dadurch gekennzeichnet, dass** sie ein Modul zum Erfassen des Zurückziehens der Karte nach einer Transaktion und ein Modul zum Steuern des Betätigungsmechanismus im Anschluss an das Erfassen aufweist.
